# EUROPEAN PATENT SPECIFICATION

(11) **EP 1 642 753 B1**
(45) Date of publication and mention of the grant of the patent: **27.06.2012**
(21) Application number: 05108589.2
(22) Date of filing: 19.09.2005
(51) Int. Cl.: B60C 11/16

(54) **Stud for tyre**
Spike für einen Reifen
Crampon pour un pneu

(30) Priority: 29.09.2004 FI 20045363
(43) Date of publication of application: 05.04.2006
(73) Proprietor: Scason Oy, 20380 Turku (FI)
(72) Inventor: Hagelin, Pentti, FIN-20780 Kaarina (FI)
(74) Representative: Valkeiskangas, Tapio Lassi Paavali

(56) References cited:
- DE-A1- 1 605 508
- US-A- 3 404 718
- US-A- 3 837 386
- US-A- 4 919 181
- US-A1- 2004 079 461

## Description

### BACKGROUND OF THE INVENTION

The invention relates to a stud according to the preamble of claim 1.

A problem with conventional studs of studded tyres, especially studs that are round in cross-profile, is that the stud may rotate in a stud hole of a studded tyre. This rotation causes the studs to wear quickly.

Finnish patent application 20021966 (applicant: Nokian Renkaat OYJ) describes a stud that comprises a stud pin and a body having a bottom flange and a top flange. Between the top and bottom flanges, there is a neck section. The sides of the top and bottom flanges may be concave.
As other examples of the prior art US-A-4 919 181 and US-A-3 404 718 can be mentioned, which disclose the features of the preamble of claim 1.

### BRIEF DESCRIPTION OF THE INVENTION

It is thus an object of the invention to develop a stud that solves the above-mentioned problem.

The object of the invention is achieved with a stud that is characterised by what is stated in independent claim 1.

Preferred embodiments of the invention are disclosed in the dependent claims.

The invention is based on having a groove, recess or the like on the side of the stud body to prevent the stud from rotating in a stud hole.

Because the stud cannot rotate in the stud hole, the abrasion of rubber against the outer surface of the stud can be prevented and, consequently, the compression force of rubber against the stud remains as strong as possible for a long time and the entry of fine rock material and dirt between the stud body and rubber mass can be prevented. The latter in particular prevents the wear of the stud body and thus lengthens the service life of the stud and reduces the detachment of the studs, for example.

In a preferred embodiment, the stud body has a bottom surface that, during the mounting of the stud in a stud hole of a studded tyre, settles close to the bottom of the stud hole, and a top surface that forms part of the outer surface of the studded tyre when the stud is mounted in the tyre, or that is in the area of the wear surface of the tyre when the stud is mounted in the studded tyre. In this preferred embodiment, the stud comprises elongate grooves that begin at a distance (for example 0.5 to 1.5 mm, preferably about 1 mm) from the top surface and continue toward the bottom surface. In many countries, law limits the mass of a stud, and most of the mass should be close to the top surface of the stud body. Because the grooves do not extend to the top surface, this positioning of the grooves provides a stud whose weight is as much as possible at the top surface of the stud.

In a second preferred embodiment of the invention, the stud has a body that comprises a bottom flange and a top flange and a neck section between them. The top flange has a top surface that forms part of the outer surface of a studded tyre when the stud is in the tyre, or that is in the area of the wear surface of the tyre when the stud is mounted in the studded tyre. In this preferred embodiment, the stud comprises elongate grooves that begin at a distance (for example 0.5 to 1.5 mm, preferably about 1 mm) from the top surface of the top flange and end substantially at the intersection of the top flange and neck section. This positioning of the grooves provides a groove of the required size without losing mass from the top flange of the stud. In many countries, law limits the mass of the stud and most of the mass should be close to the top flange and close to the top surface of the stud body.

In a third preferred embodiment of the invention, the stud body comprises a bottom flange and a top flange and neck section between them. The stud has a centre axis in the mid section. The top flange has a top surface that forms part of the outer surface of a studded tyre when the stud is in the tyre, or that is in the area of the wear surface of the tyre when the stud is mounted in the studded tyre. In this preferred embodiment, the stud comprises essentially straight elongate grooves that begin at a distance (for example 0.5 to 1.5 mm, preferably about 1 mm) from the top surface of the top flange and run obliquely toward the neck section of the stud and obliquely toward the centre axis of the stud, and said essentially straight elongate grooves end substantially at the intersection of the top flange and neck section. This positioning of the grooves provides a groove of the required size without losing mass from the top flange of the stud. In many countries, law limits the mass of the stud and most of the mass should be in the top flange and close to the top surface of the stud body.

### BRIEF DESCRIPTION OF THE FIGURES

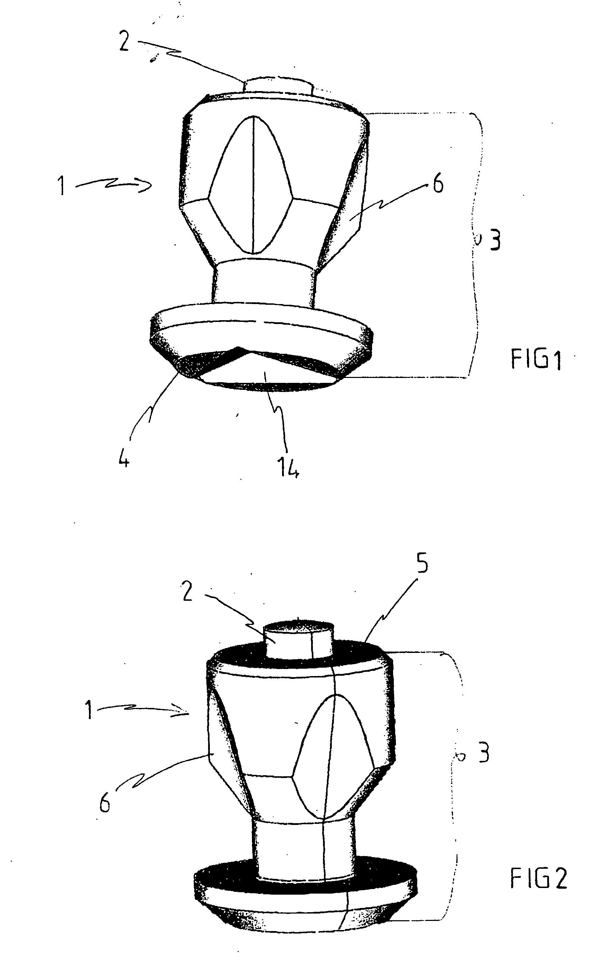

The invention will now be described in greater detail by means of preferred embodiments and with reference to the attached drawings, in which
Figure 1 shows one embodiment of the stud of the invention obliquely from below,
Figure 2 shows the stud of Figure 1 obliquely from above,

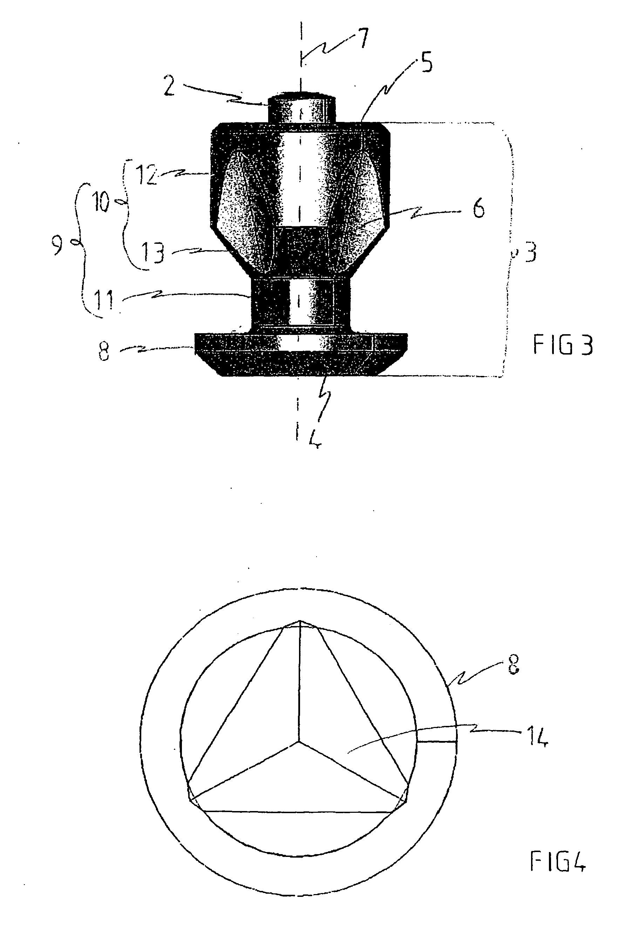

Figure 3 is a direct side view of the stud of Figure 1, and
Figure 4 is a direct bottom view of the stud of Figure 1.

### DETAILED DESCRIPTION OF THE INVENTION

The figures show a stud (not marked with a reference number) of a studded tyre, which comprises a body 1 with a stud pin 2 arranged therein in such a manner that a section of the stud pin extends outside the stud body 1.

The body 1 has an outer end (not marked with a reference number) that when the stud is mounted in a stud hole (not shown) in a studded tyre (not shown) settles in the area of the wear surface (not shown) of the tyre or close to it, and an inner end (not marked with a reference number) that when the stud is mounted in a stud hole (not shown) in a studded tyre settles close to the bottom of the stud hole. The side 3 of the body 1 refers in this context to the outer surface of the body 1 between the outer end and inner end of the body 1, i.e. the side surface of the body 1.

The stud shown in the figures has a bottom surface 4 at the inner end and a top surface 5 at the outer end. In the figure, the bottom surface 4 and the top surface 5 are planar, but it is also possible that the shape of the bottom surface 4 and/or top surface 5 differs from planar. In the stud shown in the figures, the side 3 of the body 1 is between the bottom surface 4 and top surface 5.

On the side 3 of the body 1, there is at least one groove 6, recess or the like.

The stud shown in the figure comprises a centre axis 7 that, when the stud is mounted in a studded tyre and the studded tyre is mounted on a rim (not shown) and the rim is fastened to a vehicle (not shown), intersects the rotation axis of the studded tyre (not shown) substantially at a right angle.

The stud body 1 shown in the figures is an essentially symmetrical rotation piece with respect to (around) the centre axis 7. The stud body 1 shown in the figure is thus essentially round all over in cross-section with the exception of the locations having the groove 6. However, it is also possible that the cross-sectional shape of the stud body 1 is other than round.

The stud pin 2 shown in the figures is an essentially symmetrical rotation piece with respect to (around) the centre axis 7. The stud pin 2 shown in the figure is thus essentially round all over in cross-section. However, it is also possible that the cross-sectional shape of the stud pin 2 is other than round, for instance a square or a rectangle.

The stud body 1 comprises preferably but not necessarily a bottom flange 8 and a top section 9 protruding from the bottom flange 8.

If the stud comprises a top section 9, the top section 9 comprises preferably but not necessarily a top flange 10 and a neck section 11 between the bottom flange 8 and top flange 10. The cross-section of the neck section 11 is smaller than that of the bottom flange 8 and the top flange 10.

The stud shown in the figures comprises a bottom flange 8 and a top section that comprises a top flange 10 and a neck section 11. The top flange 10 of the stud shown in the figure comprises a cylindrical section 12 and a skirt section 13 in the shape of a cut cone. The skirt section 13 in the shape of a cut cone connects to the cylindrical section 12 and is located between the cylindrical section 12 and neck section 11.

It is possible that the top flange comprises a second skirt section in the shape of a cut cone (not shown in the figures) that is located between the cylindrical section 12 and skirt section 13 in the shape of a cut cone and narrows in a different manner (at a different angle) than the skirt section 13.

It is also possible that the pin is of a type that does not comprise a top flange 10 and neck section 11, but only a bottom flange and for instance a cylindrical top section 9 to which the stud pin 2 is arranged.

The groove 6, recess or the like is preferably but not necessarily on the side 3 of the top section 9.

The groove 6, recess or the like is preferably but not necessarily formed at least partly in the top flange 10, if the stud body 1 comprises such as top flange 10.

In the figures, the groove 6, recess or the like is formed partly in the cylindrical section 12 of the top flange 10 and partly in the skirt section 13 in the shape of a cut cone on the top flange 10.

Alternatively the groove 6, recess or the like may be on the side 3 of the bottom flange.

Alternatively the groove 6, recess or the like may be formed at least partly on the neck section 11.

It is also possible that on the side 3 of the top part of the stud, there is at least one groove 6, recess or the like and that there is also at least one groove 6, recess or the like on the side 3 of the bottom flange.

It is also possible that on the side 3 of the top flange 10, there is at least one groove 6, recess or the like and that there is also at least one groove 6, recess or the like on the side 3 of the bottom flange and that there is also at least one groove 6, recess or the like on the side 3 of the neck section 11.

The groove 6, recess or the like is preferably but not necessarily an elongate groove 6.

If the stud body 1 comprises an elongate groove 6, it is preferably but not necessarily at least partially curved in cross-profile. The radius is 2.5 to 3.5 mm, for example approximately 3 mm.

The stud shown in the figures comprises several elongate straight grooves that are formed at an angle relative to the centre axis 7 of the stud.

The grooves 6 may begin for instance 0.5 to 1.5 mm, preferably approximately 1 mm from the top surface 5 of the stud, or for instance 0.5 to 1.5 mm, preferably approximately 1 mm from the point of the stud body 1 that is located furthest from the rotation axis of the studded tyre when the stud is mounted in the studded tyre.

In the figures, the grooves 6 begin approximately 1 mm from the top surface 5 and end substantially at the intersection of the skirt section 13 in the shape of a cut cone and the neck section 11. This positioning of the grooves provides a groove 6 of the required size without losing mass from the top flange 10 of the stud. In many countries, law limits the mass of the stud and most of the mass should be in the top flange 10 and close to the top surface 5 of the stud body 1.

The stud shown in the figures comprises several elongate straight grooves, to be more precise four elongate grooves 6 that are formed symmetrically relative to the centre axis 7 of the stud, in the figures at a 90-degree division, on the body 1. There may also be more or fewer than four grooves.

In the figures, the grooves 6 are preferably positioned such that the grooves 6 do not touch and thus form an acute angle or edge, but such that there is a curved outer surface section of the body 1 between the grooves.

It is also possible that on the side 3 of the body 1, grooves 6 are formed that intersect each other or whose imaginary extensions intersect each other.

The bottom surface 4 of the stud has preferably but not necessarily a second recess 14. The bottom flange 8 of the stud shown in the figure has a second recess 14 in the shape of a pyramid, more precisely in the shape of a three-sided pyramid. The second recess 14 is preferably 0.5 to 1.5 mm deep, more preferably approximately 1 mm deep, for example 0.9 mm deep as measured from the bottom surface 4 of the stud body 1.

It is apparent to a person skilled in the art that as technology advances, the basic idea of the invention can be implemented in many different ways. The invention and its embodiments are thus not restricted to the examples described above, but may vary within the scope of the claims.

## Claims

1. A stud of a studded tyre, comprising a body (1) having a centre axis (7) and a stud pin (2) arranged to the body (1), and the body (1) comprises a top surface (5) that, when the stud is mounted in a stud hole of a studded tyre, is intended to be located in the area of the wear surface of the tyre or close thereto, and a bottom surface (4) that, when the stud is mounted in a stud hole of a studded tyre, is intended to be located close to the bottom of the stud hole, wherein the side (3) of the stud body (1) has an elongate groove (6) that is arranged to begin at a distance from the top surface (5) and to run towards the bottom surface (4), **characterised in that**the distance is approximately 0,5 to 1,5 mm.

2. A stud as claimed in claim 1, **characterised in that** the elongate groove is arranged to begin at approximately 1 mm from the top surface (5).

3. A stud as claimed in any of the claims 1 to 2, **characterised in that** the elongate groove (6) is arranged to end at a distance from the bottom surface (4).

4. A stud as claimed in any of the claims 1 to 3, **characterised in that** there are several elongate grooves (6) and that the elongate grooves (6) are arranged symmetrically with respect to the centre axis (7).

5. A stud as claimed in any of the claims 1 to 4, **characterised in that** the elongate groove (6) is straight.

6. A stud as claimed in any one of claims 1 to 4, **characterised in that** the elongate groove (6) is at least partly curved.

7. A stud as claimed in any one of claims 1 to 6, **characterised in that** the elongate groove is arranged to be at an angle to the centre axis (7).

8. A stud as claimed in claim 1 in which the stud body (1) comprises a bottom flange (8) and a top section (9) comprising a top flange (10), and a neck section (11) between the bottom flange and the top flange, **characterised in that** the elongate groove (6) is arranged at the side of the top flange (10).

9. A stud as claimed in claim 8, **characterised in that** the elongate groove (6) is arranged to end essentially at the intersection of the top flange (10) and the neck section (11).

10. A stud as claimed in claim 1 in which the stud body (1) comprises a bottom flange (8) and a top section (9) comprising a top flange (10), and a neck section (11) between the bottom flange and the top flange, **characterised in that** the elongate groove (6) is arranged at the side of the bottom flange (8)

11. A stud as claimed in claim 1 that comprises a top flange (10) and a bottom flange (8), the bottom surface of the bottom flange being arranged to form the bottom surface of the body (1), **characterised in that** a recess (14) is arranged to the bottom surface (4).

12. A stud as claimed in claim 11, **characterised in that** the recess (14) is at least partly in the shape of a pyramid.

13. A stud as claimed in claim 12, **characterised in that** the recess is at least partly in the shape of a three-sided pyramid.

## Patentansprüche

1. Spike eines Spikereifens, umfassend einen Körper (1) mit einer Mittelachse (7) und einen Spikestift (2), der am Körper (1) angebracht ist, und wobei der Körper (1) eine Oberseite (5), die sich, wenn der Spike in einem Spikeloch eines Spikereifens befestigt ist, im Bereich der Verschleißfläche des Reifens oder in der Nähe davon befinden soll, und eine Unterseite (4) umfasst, die sich, wenn der Spike in einem Spikeloch eines Spikereifens befestigt ist, in der Nähe des Bodens des Spikelochs befinden soll, wobei die Seite (3) des Spikekörpers (1) eine längliche Rille (6) aufweist, die so angebracht ist, dass sie in einem Abstand von der Oberseite (5) beginnt und zur Unterseite (4) hinab verläuft, **dadurch gekennzeichnet, dass** der Abstand ungefähr 0,5 bis 1,5 mm beträgt.

2. Spike nach Anspruch 1, **dadurch gekennzeichnet, dass** die längliche Rille so angeordnet ist, dass sie ungefähr 1 mm von der Oberseite (5) entfernt beginnt.

3. Spike nach einem der Ansprüche 1 oder 2, **dadurch gekennzeichnet, dass** die längliche Rille (6) so angeordnet ist, dass sie in einem Abstand von der Unterseite (4) entfernt endet.

4. Spike nach einem der Ansprüche 1 bis 3, **dadurch gekennzeichnet, dass** es mehrere längliche Rillen (6) gibt und dass die länglichen Rillen (6) in Bezug auf die Mittelachse (7) symmetrisch angeordnet sind.

5. Spike nach einem der Ansprüche 1 bis 4, **dadurch gekennzeichnet, dass** die längliche Rille (6) gerade ist.

6. Spike nach einem der Ansprüche 1 bis 4, **dadurch gekennzeichnet, dass** die längliche Rille (6) wenigstens teilweise gekrümmt ist.

7. Spike nach einem der Ansprüche 1 bis 6, **dadurch gekennzeichnet, dass** die längliche Rille so angeordnet ist, dass sie sich in einem Winkel zur Mittelachse (7) befindet.

8. Spike nach Anspruch 1, wobei der Spikekörper (1) einen unteren Flansch (8) und einen oberen Abschnitt (9) umfasst, der einen oberen Flansch (10) und einen Halsabschnitt (11) zwischen dem unteren Flansch und dem oberen Flansch umfasst, **dadurch gekennzeichnet, dass** die längliche Rille (6) an der Seite des oberen Flansches (10) angeordnet ist.

9. Spike nach Anspruch 8, **dadurch gekennzeichnet, dass** die längliche Rille (6) so angeordnet ist, dass sie im Wesentlichen am Schnittpunkt des oberen Flansches (10) und des Halsabschnitts (11) endet.

10. Spike nach Anspruch 1, wobei der Spikekörper (1) einen unteren Flansch (8) und einen oberen Abschnitt (9) umfasst, der einen oberen Flansch (10) und einen Halsabschnitt (11) zwischen dem unteren Flansch und dem oberen Flansch umfasst, **dadurch gekennzeichnet, dass** die längliche Rille (6) an der Seite des unteren Flansches (8) angeordnet ist.

11. Spike nach Anspruch 1, umfassend einen oberen Flansch (10) und einen unteren Flansch (8), wobei die Unterseite des unteren Flansches so angeordnet ist, dass sie die Unterseite des Körpers (1) bildet, **dadurch gekennzeichnet, dass** ein Rücksprung (14) an der Unterseite (4) angeordnet ist.

12. Spike nach Anspruch 11, **dadurch gekennzeichnet, dass** der Rücksprung (14) wenigstens teilweise die Form einer Pyramide aufweist.

13. Spike nach Anspruch 12, **dadurch gekennzeichnet, dass** der Rücksprung wenigstens teilweise die Form einer dreiseitigen Pyramide aufweist.

## Revendications

1. Crampon d'un pneu à crampons, comprenant un corps (1) possédant un axe central (7) et une tige de crampon (2) agencée sur le corps (1), et le corps (1) comprend une surface supérieure (5) qui, lorsque le crampon est monté dans un trou à crampon d'un pneu à crampons, est prévu pour être positionnée dans la zone de la surface d'usure du pneu ou proche de celle-ci, et une surface inférieure (4) qui, lorsque le crampon est monté dans un trou à crampon d'un pneu à crampons, est prévue pour être positionnée près du fond du trou à crampon, dans lequel le côté (3) du corps de crampon (1) comporte une rainure allongée (6) qui est agencée pour commencer à une distance de la surface supérieure (5) et pour aller vers la surface inférieure (4), **caractérisé en ce que** la distance est approximativement 0,5 à 1,5 mm.

2. Crampon selon la revendication 1, **caractérisé en ce que** la rainure allongée est agencée pour commencer à approximativement 1 mm de la surface supérieure (5).

3. Crampon selon une quelconque des revendications 1 à 2, **caractérisé en ce que** la rainure allongée (6) est agencée pour se terminer à une distance de la surface inférieure (4).

4. Crampon selon une quelconque des revendications 1 à 3, **caractérisé en ce qu'**il y a plusieurs rainures allongées (6) et que les rainures allongées (6) sont agencées symétriquement par rapport à l'axe central (7).

5. Crampon selon une quelconque des revendications 1 à 4, **caractérisé en ce que** la rainure allongée (6) est droite.

6. Crampon selon une quelconque des revendications 1 à 4, **caractérisé en ce que** la rainure allongée (6) est au moins partiellement incurvée.

7. Crampon selon une quelconque des revendications 1 à 6, **caractérisé en ce que** la rainure allongée est agencée pour être à un angle par rapport à l'axe central (7).

8. Crampon selon la revendication 1, dans lequel le corps de crampon (1) comprend une bride inférieure (8) et une section supérieure (9) comprenant une bride supérieure (10), et une section de col (11) entre la bride inférieure et la bride supérieure, **caractérisé en ce que** la rainure allongée (6) est agencée sur le côté de la bride supérieure (10).

9. Crampon selon la revendication 8, **caractérisé en ce que** la rainure allongée (6) est agencée pour se terminer essentiellement à l'intersection de la bride supérieure (10) et de la section de col (11).

10. Crampon selon la revendication 1, dans lequel le corps de crampon (1) comprend une bride inférieure (8) et une section supérieure (9) comprenant une bride supérieure (10), et une section de col (11) entre la bride inférieure et la bride supérieure, **caractérisé en ce que** la rainure allongée (6) est agencée sur le côté de la bride inférieure (8)

11. Crampon selon la revendication 1, qui comprend une bride supérieure (10) et une bride inférieure (8), la surface inférieure de la bride inférieure étant agencée pour former la surface inférieure du corps (1), **caractérisé en ce qu'**un évidement (14) est agencé sur la surface inférieure (4).

12. Crampon selon la revendication 11, **caractérisé en ce que** l'évidement (14) est au moins partiellement en forme de pyramide.

13. Crampon selon la revendication 12, **caractérisé en ce que** l'évidement est au moins partiellement en forme de pyramide à trois côtés.
